# EUROPEAN PATENT SPECIFICATION

(11) **EP 2 139 653 B1**
(45) Date of publication and mention of the grant of the patent: **02.01.2019**
(21) Application number: 08724239.2
(22) Date of filing: 17.03.2008
(51) Int. Cl.: B26D 7/22, B26F 3/00, B23Q 5/58

(54) **COLLISION SENSING DEVICE**
KOLLISIONSERKENNUNGSVORRICHTUNG
DISPOSITIF DE DÉTECTION DE COLLISION

(30) Priority: 20.03.2007 SE 0700692
(43) Date of publication of application: 06.01.2010
(73) Proprietor: Water Jet Sweden AB, 372 38 Ronneby (SE)
(72) Inventor: RYDH, Jan, S-372 38 Ronneby (SE)
(74) Representative: Zacco Sweden AB
(86) International application number: PCT/SE2008/050292
(87) International publication number: WO 2008/115137

(56) References cited:
- EP-A1- 1 810 795
- EP-A2- 1 004 395
- JP-A- H0 496 717
- KR-A- 20020 048 745
- US-A- 4 756 480
- US-A1- 2001 018 855
- US-A1- 2006 087 417
- Anonymous: "Shore-Härte - Lexikon der Kunststoffprüfung", , 10 May 2017 (2017-05-10), XP055371093, Retrieved from the Internet: URL:http://wiki.polymerservice-merseburg.d e/index.php/Shore-Härte [retrieved on 2017-05-10]

## Description

### Field of invention

The invention relates to a collision sensing device, which is adapted to detect a collision between two or more objects. The invention also relates to an apparatus for machining that comprises said collision sensing device.

In many situations, it is desirable to detect a collision between objects. One purpose can be avoiding collisions. Primary, the invention in directed towards detecting a collision between a tool and an obstacle in a workpiece during machining. Machining is here intended to in particular comprise all sorts of cutting machining such as water jet cutting, gas cutting, plasma cutting, laser cutting et cetera. During the machining it can on the one hand be desired to protect the tool, e.g. a nozzle of some kind, from damage due to a collision with an obstacle such as an unevenness in the workpiece. On the other hand, it can be desired to protect parts of the workpiece from damage due to collisions with a tool. The invention can also used in other situations, such as vehicles, in particular in connection with parking of vehicles.

A traditional way of protecting objects is to provide them with a shock absorbing protection of flexible material.

In US5366156 A is described how an object is cleaned by means of an aerosol which is directed at the surface of the object by a nozzle 202. The nozzle is provided with a protecting coating 265 (figure 8) in order to protect the object against damage by accidental contact with the nozzle. Such a coating can only provide a limited protection. In case the nozzle is guided with great force, for instance, there is a risk that the nozzle is bent as a result of collision with an object. Also the object may be may be damaged. Further, US5366156 A does not provide for a detection of the collision.

EP1810795 A1 describes a safety device for an industrial robot comprising a manipulator and a control unit, which safety device comprises protecting means arranged on at least a part of the manipulator and sensor means connected to the control unit. The protecting means comprises at least one elastic sealed bag and means adapted to measure an increase in the internal pressure of the bag. The safety device detects a collision between two or more objects after the collision has occurred.

US 2006/087417 discloses an obstacle discrimination device for a vehicle including an absorber arranged at a front surface of a bumper reinforce member in a bumper cover of the vehicle. The absorber has therein at least one chamber, in which fluid is sealed. A pressure in the chamber varies due to a collision of an obstacle with a bumper of the vehicle. Part of the chamber or chamber portions of the absorber at which impact is exerted is deformed and buffers the collision when an obstacle collides with the bumper so that pressure in the chamber or chambers varies.

On vehicles, such as cars, bumpers provide a corresponding protection. When it comes to vehicles, collisions can also be avoided by means of more sophisticated equipment, such as so called backup sensors that alert when obstacles approach. Here, use is made of ultrasound which is reflected against the obstacle. Technique of this kind is relatively expensive. Further, a plurality of sensors must be installed in order to protect an object in all directions. Moreover, the sensors are sensitive to dirt, humidity and mechanical influences.

In connection with machining, collision sensing devises incorporating electrical switches that signal collisions have been put to use. However, this solution has not led to satisfying results. This is partly because these collisions sensing devises often have been damaged due to mechanical influences, and partly because they have been expensive owing to a relatively complex design construction.

Thus, there is a need for a collision sensing device that is reliable, has a relatively simple construction, can endure dirt and mechanical influences, and is independent of the form of the obstacle.

### Summary of the invention

The present invention relates to a collision sensing device, preferably adapted for use in a water jet cutting apparatus, which can detect a collision between two or more objects. The collision sensing device comprises a deformable member which upper side defines a space that can be assigned a pressure. In a first condition, the deformable member is undeformed whereby the space is assigned a first pressure. In a second condition, the deformable member is deformed whereby the space is assigned a second pressure. Upon collision of the deformable member with an object, the deformable member is deformed into the second condition, whereby the pressure in the space changes from the first pressure to the second pressure. The collision sensing device further comprises a means for detecting the pressure change. The first pressure is preferably an overpressure. Thereby is prevented that dirt or other unwanted material enters the space. The second pressure is lower than the first pressure. The collision sensing device can also include a means for providing the space said overpressure through an opening in the boundary surface of the space.

In the first condition, i.e. when the deformable member is undeformed, the space is preferably closed. After the deformation of the deformable member, i.e. to the second condition, the space is preferably not closed. As a consequence, the second pressure will be closer to the ambient pressure than is the first pressure.

The deformable member is a splatter shield which has the form of a frustum of a cone with circular cross-section. The cone is arranged with its wider end towards a workpiece. Hereby a relatively large detection or sensing area is obtained, within which a collision with one or more objects is detected. The splatter shield can also take other forms. The splatter shield can e.g. be of rectangular cross-section, or be tubular. The space that is assigned the pressure is defined by the upper side of the splatter shield, a bulge enclosing the upper side of the splatter shield and also a support plate which is sealingly arranged against the bulge. In this manner, a collision sensing device of simple construction in achieved.

The invention further relates to an apparatus for machining where the apparatus comprises said collision sensing device. The machining is preferably water jet cutting.

### Brief description of the figures

- Figure 1: shows a schematical sketch of the invention in perspective.
- Figure 2: shows a splatter shield and an arm for height adjustment.
- Figure 3: shows a cross-section through a splatter shield and a support plate in accordance with the present invention.

### Detailed description of the invention

Below, an embodiment of the invention is described with reference to the enclosed figures. The embodiment merely serves as an example of an application of the invention, and is not intended to limit the claimed scope, which is defined by the independent claims.

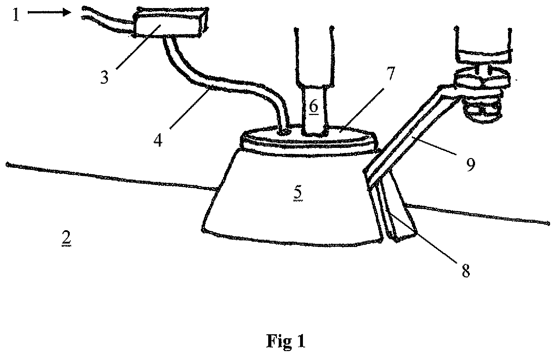

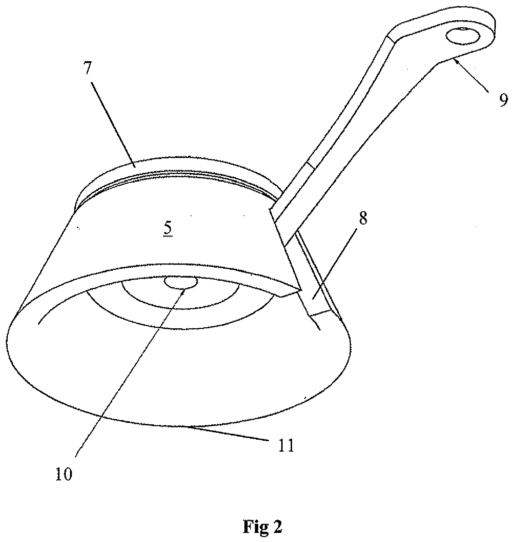

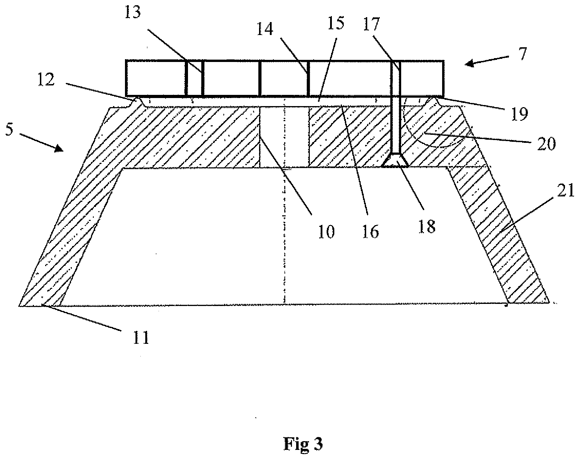

A preferred embodiment of the invention is shown in figure 1, where the collision sensing devise is adapted for use in water jet cutting. In this apparatus for water jet cutting a splatter shield 5 is utilized as deformable member, which encloses a nozzle 6 for water jet cutting. The splatter shield 5 comprises a side wall and an upper part. The side wall of the splatter shield 5 is formed as a frustum of a cone, se also figure 2 and 3. The cone has a wider end and a narrower end. The wider end, which is turned downwards in the figures, is open and is during machining located just above the surface of the workpiece 2. The edge 11 of the wider end is located closer to the surface of the workpiece 2 than is the end of the nozzle 6, or, the edge 11 of the wider end is located at the same distance from the surface of the workpiece as is the end of the nozzle 6. The narrower end, i.e. the upper part 20 of the splatter shield that is turned upwards in the figures, is closed with exception for a central opening 10 which is intended for the water jet cutting nozzle 6 (below referred to as "nozzle").

During the water jet cutting the splatter shield 5 is arranged around the nozzle 6 and retained in an appropriate manner, e.g. by force fit. The diameter of the central opening 10 is then made somewhat smaller than the diameter of the nozzle 6. The primary task of the splatter shield is to hinder material and water splatter from the machining process. The splatter shield is manufactured from a soft flexible material, such as rubber with a Shore hardness within the range 75-95, preferably the Shore hardness is within the range 85-95, more preferably the Shore hardness is around 90.

Figure 2 shows a perspective view of the splatter shield 5 as viewed at an angle from the workpiece 2. The splatter shield 5 has a notch 8 in the side wall 21, through which notch 8 an arm 9 for height adjustment extends. During operation, the arm 9 for height adjustment holds a not shown measurement means, which measures the distance from the nozzle 6 and the workpiece 2. The present invention also functions without said notch 8 and said arm 9 for height adjustment, respectively.

The upper side 16 of the splatter shield 5, i.e. the closed and away from the workpiece 2 turned end of the cone, is enclosed by a protruding edge or bulge 12, see in particular figure 3. An essentially circular support plate 7 is arranged against the bulge 12, whereby the under side 19 of the support plate 7 bears against the upper side of the bulge 12. Since the splatter shield 5 is made from a soft elastic material, the bulge 12 lies sealingly against the support plate 7. The support plate is preferably manufactured from a form stable material, e.g. metal or plastic. The support plate shall be of such form and size that it seals against the bulge in the undeformed condition of the splatter shield.

The nozzle 6 passes through the support plate 7 and the splatter shield 5. The central opening 10 in the upper part 20 of the splatter shield 5, through which the nozzle 6 passes, has a slightly smaller diameter than has the nozzle 6, so that the splatter shield 5 seals against the nozzle 6. Also the support plate 7 is furnished with a central opening 14, through which the nozzle 6 passes. This opening 14 is adjusted for the diameter of the nozzle 6, it is also feasible to arrange a suitable sealing between the central opening 14 of the support plate 7 and the nozzle 6, e.g. in the form of one or more O-rings (not shown). Consequently, an essentially closed space 15 is defined by a boundary surface which is formed by the upper side 16 of the splatter shield 5, the inner side of the bulge 12 of the splatter shield, the under side 19 of the support plate 7, and also the nozzle 6 and any sealings arranged around this.

The support plate is preferably fixed to the splatter shield, which, in turn, is fixed to the nozzle 5. In figure 3 is schematically shown how the support plate 7 is fixed to the splatter shield 5 by means of an attachment means 18, which extends through the upper part 20 of the splatter shield and into an opening 17 in the support plate. The attachment means 18 can e.g. be a screw or a bolt, in which case the opening 17 is provided with an inner thread. In order to make sure that the bulge 12 bears sealingly against the under side 19 of the support plate with an even contact pressure along the entire circumference of the bulge, as seen in a plane parallel to the upper part 20 of the splatter shield, a number of attachment means 18 are preferably arranged. The attachment means 18 are preferably arranged at even intervals along the circumference of the splatter shield and the support plate. For example, three attachment means 18 at a mutual distance of 120° in a plane parallel to the upper part 20 of the splatter shield can be put to use. In order to achieve a yet more even contact pressure between the bulge 12 and the under side 19 of the support plate, a lager number of attachment means 18 can be used.

For reasons that will be clear below, such attachment means 18 should not be arranged at the very outer circumference of the upper part 20 of the splatter shield 5. Such placement of the attachment means 18 would impede the deformation of the splatter shield 5.

Alternatively, the support plate 7 can be attached to the nozzle 6 by means of not shown fixing means. Such fixing means include e.g. adhesive or screw connection.

In order to achieve the essentially closed space described above, other designs of the splatter shield and the support plate are conceivable. For instance, the upper side of the splatter shield may be flat, and a bulge facing the splatter shield may be formed on the support plate. Alternatively, a separate sealing element, such as an O-ring or a gasket, may be arranged between the support plate and the upper side of the splatter shield.

In figure 1 the apparatus for water jet cutting with the collision sensing device is shown in its entirety. The support plate 7 comprises an opening 13 for air supply. This opening 13 can e.g. be formed as an internally threaded hole. To the opening 13 a conduit 4 is connected, through which the spacing is provided with a gas, preferably air. The air is provided from a not shown pressure generating means, such as a compressor, as is indicated by the arrow 1 in figure 1. The pressure in the conduit 4 is monitored by a pressure monitoring means 3. In this way the space 15, which is defined by the splatter shield 5 and the support plate 7, can be assigned a monitored static overpressure i.e. a pressure exceeding the ambient pressure. This overpressure thus corresponds to the pressure in the conduit 4. At normal operation the space 15 is supplied with air through the conduit 4, whereby a first pressure P1 prevails in the space 15. Thus, the pressure P1 exceeds the ambient pressure. The overpressure P1 in the space 15 lies within the range 0.1-2 bar, preferably the overpressure P1 lies within the range 0.2-1.5 bar, most preferred is an overpressure of 0.3-0.8 bar.

Alternatively, the pressure generating means and the pressure monitoring means can be connected to the support plate 7 via separate conduits or hoses. The support plate 7 is then modified so as to comprise an opening for supply of air, or another gas, and one opening for pressure measurement. The pressure measurement means can also, instead of being connected via a conduit, be arranged directly on the support plate 7.

During the water jet cutting, the nozzle 6 which is furnished with the splatter shield 5 is driven along the along the workpiece 2 to be machined, or the workpiece 2 is moved while the nozzle 6 with its splatter shield 5 is kept still. This movement of the nozzle 6 or the workpiece 2 is normally performed mechanically following a programmed path. In case an object or an unevenness, which protrudes from the surface of the workpiece 2, is located in or close to the intended path of the nozzle 6, the splatter shield 5, due to the relative movement, will contact this object. Then, due to the relative movement, the splatter shield 5 will deform elastically. Typically, this deformation will imply that the side wall 21 of the splatter shield 5 is pushed in, in a direction essentially perpendicular to the longitudinal axis of the nozzle 6, towards the centre of the frustum of a cone. This impression will cause a displacement of the bulge 12 of the splatter shield, so that the sealing contact with the support plate 7 is broken. Typically, the bulge 12 is displaced downwards in figure 1, i.e. towards the surface of the workpiece 2. As the bulge 12 no longer bears against the support plate 7, the space 15 is no longer closed. Now, the air that is supplied to the space 15 via the conduit 4 can flow out through the opening which is formed in the boundary surface of the space 15 upon the deformation of the splatter shield 5, whereby the pressure in the space 15 falls to a second pressure P2. The pressure P2 is thereby lower than the pressure P1, and more precisely the pressure P2 lies between the ambient pressure and the pressure P1, depending on how much the splatter shield 5 is deformed upon the collision with the object, as explained below. Preferably the overpressure P2 amounts to about half of the overpressure P1. The pressure change within the space can be detected by the pressure measurement means 3. Preferably, the pressure measurement means 3 thereby can emit a stop signal which interrupts the mechanical movement of the nozzle 6 or the workpiece 2. In this manner a collision between the nozzle 6 and the object is avoided.

Depending on how fast the movement is interrupted, and which speed the relative movement has, the splatter shield 5 is deformed to a different extent at the contact with an obstacle. If the speed of the relative movement, i.e. the cutting speed, is low and if the movement is interrupted immediately at the smallest change from the pressure P1 within the space 15, the bulge 12 of the splatter shield 5 will only be displaced a short distance from the support plate 7 on collision with an obstacle. In this case, only a small deformation of the splatter shield 5 is allowed and a relatively large remaining distance between the nozzle 6 and the obstacle is ensured. Now, the second pressure P2 will be relatively close to the first pressure P1. By defining in advance the change of pressure to be required by the pressure measurement means in order to emit a stop signal, the distance at which the nozzle 6 shall stop from an imaginary obstacle can be preset.
Thus, with the present arrangement of the deformable member 5, a collision, or a contact with an obstacle, is detected well before the object to be protected, here the nozzle 6, collides with the obstacle. In other words, it is the deformable member 5 that is subject to the collision.

Since the pressure measurement means 3 detects a pressure change, from P1 to P2, upon the splatter shields 5 collision with an object the space 15 need not be completely airtight. The space 15 can be continuously supplied with air, or another gas, from the pressure generating means. If the space 15 is not completely airtight, but comprises one or more openings in the boundary surface, the supplied air will continuously leak out. Nonetheless, a first pressure, P1, will prevail in the space which pressure upon deformation of the splatter shield 5, and upon subsequent displacement of the bulge 12 from the support plate 7, will decrease to a second pressure, P2.

Preferably, as mentioned, said pressure generating means gives rise to an overpressure, P1, within the space 15. The advantage of keeping an overpressure in the space 15 is that neither dirt nor other unwanted material can enter the space 15 or the pressure generating means or the pressure measurement means 3. However, the invention also functions if the pressure generation means gives rise to an underpressure. Upon collision and transition to the second pressure, P2, ambient air would flow into the space 15, and the second pressure, P2, would consequently be higher than the first pressure, P1. An advantage of assigning the space 15 and underpressure is that the underpressure contributes to keeping the space 15 tight, in that the underpressure acts on the elastic splatter shield whereby the bulge 12 is pressed against the support plate 7.
The principle of the invention, to assign an essentially closed space a pressure which is monitored and which is changed as the boundary surface of the space is opened in connection with a deformation of an elastic member due to a contact between two objects, can be put to use in several situations. For instance, such a space could be defined by a relatively soft an elastic part op a vehicle bumper. A driver could in this manner be notified upon collision with another object.

When choosing material for the deformable member, the collision force and the sizes of the constituents must be carefully considered, so that the material is sufficiently compliant for the closed pressurized space to open upon a collision, but at the same time rigid enough to resist opening during operation due to other parameters. Examples of such parameters, when the collision sensing device is used in connection with water jet cutting, are acceleration upon change of cutting speed, the presence of loose objects such as grains of sand on the surface of the workpiece, the overpressure within the space, air pressure generated by the cutting beam, material and water splatter from the cutting process et cetera.

## Claims

1. Collision sensing device, preferably for a water jet cutting device, adapted to detect a collision between two or more objects, wherein said collision sensing device comprises
a deformable member (5) of elastically deformable material which upper side (16) defines a space (15) that can be assigned a pressure, which deformable member (5) in a first condition is undeformed whereby the space (15) is assigned a first pressure (P1), and wherein in a second condition the deformable member (5) is deformed whereby the space (15) is assigned a second pressure (P2),
wherein the deformable member (5), upon collision of the deformable member (5) with an object, is deformed into the second condition whereby the pressure in the space (15) changes from the first (P1) pressure to the second pressure (P2), and
a means (3) for detecting the pressure change,
**characterised in that** the deformable member (5) is a splatter shield which has the form of a frustum of a cone, wherein the space (15) is further defined by a bulge (12) enclosing the upper side (16) of the splatter shield (5) and also a support plate (7) which is sealingly arranged against the bulge (12).

2. Collision sensing device according to claim 1, wherein the assigned pressure in the space (15) is an overpressure (P1) in the first condition, which pressure falls upon change to the second condition.

3. Collision sensing device according to any one of the preceding claims, wherein the boundary surface of the space (15) comprises an opening (13), through which the space (15) is assigned the first pressure (P1).

4. Collision sensing device according to any one of the preceding claims, wherein the device further comprises a means for assigning the space (15) an overpressure.

5. Collision sensing device according to any one of the preceding claims, wherein the space (15) is closed in the first condition, whereas, in the second condition, the space (15) is not closed.

6. Collision sensing device according to any one of the preceding claims, wherein the deformable member (5) is made from an elastic material with a Shore hardness within the range 75-95, preferably the Shore hardness is within the range 85-95.

7. Apparatus for machining, **characterised in that** the apparatus comprises a collision sensing device in accordance with claim 1.

8. Apparatus according to claim 7, wherein the machining is water jet cutting.

## Patentansprüche

1. Kollisionserkennungsvorrichtung, vorzugsweise für eine Wasserstrahlschneidvorrichtung, die dafür ausgelegt ist, eine Kollision zwischen zwei oder mehr Objekten zu detektieren, wobei die Kollisionserkennungsvorrichtung Folgendes umfasst:
ein verformbares Element (5) aus elastisch verformbarem Material, dessen Oberseite (16) einen Raum (15) definiert, dem ein Druck zugewiesen werden kann, wobei das verformbare Element (5) in einem ersten Zustand unverformt ist, wodurch dem Raum (15) ein erster Druck (P1) zugewiesen wird, und wobei in einem zweiten Zustand das verformbare Element (5) verformt ist, wodurch dem Raum (15) ein zweiter Druck (P2) zugewiesen wird,
wobei das verformbare Element (5) bei einer Kollision des verformbaren Elements (5) mit einem Objekt in den zweiten Zustand verformt wird, wodurch sich der Druck in dem Raum (15) von dem ersten Druck (P1) zu dem zweiten Druck (P2) ändert; und
ein Mittel (3) zum Detektieren der Druckänderung,
**dadurch gekennzeichnet, dass** das verformbare Element (5) ein Spritzschutz ist, der die Form eines Kegelstumpfes aufweist, wobei der Raum (15) ferner durch eine Wölbung (12), welche die Oberseite (16) des Spritzschutzes (5) umschließt, sowie durch eine Stützplatte (7), die gegen die Wölbung (12) dichtend angeordnet ist, definiert ist.

2. Kollisionserkennungsvorrichtung nach Anspruch 1, wobei der zugewiesene Druck in dem Raum (15) ein Überdruck (P1) in dem ersten Zustand ist, der beim Wechsel in den zweiten Zustand abfällt.

3. Kollisionserkennungsvorrichtung nach einem der vorstehenden Ansprüche, wobei die Grenzfläche des Raums (15) eine Öffnung (13) umfasst, durch die dem Raum (15) der erste Druck (P1) zugewiesen wird.

4. Kollisionserkennungsvorrichtung nach einem der vorstehenden Ansprüche, wobei die Vorrichtung ferner ein Mittel zum Zuweisen eines Überdrucks an den Raum (15) umfasst.

5. Kollisionserkennungsvorrichtung nach einem der vorstehenden Ansprüche, wobei der Raum (15) in dem ersten Zustand geschlossen ist, während der Raum (15) in dem zweiten Zustand nicht geschlossen ist.

6. Kollisionserkennungsvorrichtung nach einem der vorstehenden Ansprüche, wobei das verformbare Element (5) aus einem elastischen Material mit einer Shore-Härte im Bereich von 75 bis 95 hergestellt ist, wobei die Shore-Härte vorzugsweise im Bereich von 85-95 liegt.

7. Vorrichtung zum maschinellen Bearbeiten, **dadurch gekennzeichnet, dass** die Vorrichtung eine Kollisionserkennungsvorrichtung nach Anspruch 1 umfasst.

8. Vorrichtung nach Anspruch 7, wobei das maschinelle Bearbeiten Wasserstrahlschneiden ist.

## Revendications

1. Dispositif de détection de collision, de préférence pour un dispositif de découpe par jet d'eau, conçu pour détecter une collision entre deux objets ou plus, dans lequel ledit dispositif de détection de collision comprend:
un élément déformable (5) de matériau élastiquement déformable dont le côté supérieur (16) définit un espace (15) auquel on peut attribuer une pression, lequel élément déformable (5) dans une première condition est non déformé moyennant quoi l'espace (15) se voit attribuer une première pression (P1), et dans lequel, dans une deuxième condition, l'élément déformable (5) est déformé moyennant quoi l'espace (15) se voit attribuer une deuxième pression (P2),
dans lequel l'élément déformable (5), lors d'une collision de l'élément déformable (5) avec un objet, est déformé dans la deuxième condition moyennant quoi la pression dans l'espace (15) change de la première (P1) pression à la deuxième pression (P2), et un moyen (3) pour détecter le changement de pression,
**caractérisé en ce que** l'élément déformable (5) est un écran anti-éclaboussures qui a la forme d'un tronc de cône, dans lequel l'espace (15) est en outre défini par une protubérance (12) enfermant le côté supérieur (16) de l'écran anti-éclaboussures (5) et également une plaque de support (7) qui est hermétiquement agencée contre la protubérance (12).

2. Dispositif de détection de collision selon la revendication 1, dans lequel la pression attribuée dans l'espace (15) est une surpression (P1) dans la première condition, laquelle pression descend lors d'un changement à la deuxième condition.

3. Dispositif de détection de collision selon l'une quelconque des revendications précédentes, dans lequel la surface limite de l'espace (15) comprend une ouverture (13), à travers laquelle l'espace (15) se voit attribuer la première pression (P1).

4. Dispositif de détection de collision selon l'une quelconque des revendications précédentes, dans lequel le dispositif comprend en outre un moyen pour attribuer à l'espace (15) une surpression.

5. Dispositif de détection de collision selon l'une quelconque des revendications précédentes, dans lequel l'espace (15) est fermé dans la première condition, alors que, dans la deuxième condition, l'espace (15) n'est pas fermé.

6. Dispositif de détection de collision selon l'une quelconque des revendications précédentes, dans lequel l'élément déformable (5) est fabriqué à partir d'un matériau élastique avec une dureté Shore dans la plage 75 à 95, de préférence la dureté Shore est dans la plage 85 à 95.

7. Appareil d'usinage, **caractérisé en ce que** l'appareil comprend un dispositif de détection de collision selon la revendication 1.

8. Appareil selon la revendication 7, dans lequel l'usinage est une découpe par jet d'eau.
